# EUROPÄISCHE PATENTANMELDUNG

(11) **EP 3 918 897 A1**
(43) Veröffentlichungstag der Anmeldung: **08.12.2021**
(21) Anmeldenummer: 21176455.0
(22) Anmeldetag: 28.05.2021
(51) Int. Cl.: A01C 7/12, A01C 19/00

(54) **DOSIEREINRICHTUNG, INSBESONDERE FÜR EINE DRILLMASCHINE**

(30) Priorität: 05.06.2020 DE 102020115005
(71) Anmelder: Horsch Maschinen GmbH, 92421 Schwandorf (DE)
(72) Erfinder: Egelseer, Bastian, 92421 Schwandorf (DE)
(74) Vertreter: v. Bezold & Partner Patentanwälte - PartG mbB

(57) **Zusammenfassung**

Die Erfindung betrifft eine Dosiereinrichtung zum Dosieren von Dosiergut, insbesondere zum Dosieren von Saatgut in einer Drillmaschine. Die erfindungsgemäße Dosiereinrichtung enthält mehrere Dosierer (3-5) mit jeweils mindestens einem drehbaren Dosierrad zum Dosieren des Dosierguts. Weiterhin hat die erfindungsgemäße Dosiereinrichtung eine drehbare Hauptantriebswelle (6) zum Antrieb der Dosierräder der Dosierer (3-5). Die Erfindung zeichnet sich gegenüber dem Stand der Technik durch mehrere separate Dosiererantriebswellen aus, die jeweils mindestens einen der Dosierer (3-5) antreiben und von der Hauptantriebswelle (6) angetrieben werden können.

## Beschreibung

Die Erfindung betrifft eine Dosiereinrichtung zum Dosieren von Dosiergut, insbesondere zum Dosieren von Saatgut in einer Drillmaschine.

In der Landwirtschaft werden zum Aussäen von Saatgut Drillmaschinen eingesetzt, wie sie beispielsweise aus EP 2 832 203 B1 bekannt sind. Diese bekannten Drillmaschinen weisen eine Vielzahl von nebeneinander in einer Reihe angeordneten Dosierern auf, die das Saatgut dosieren. Die einzelnen Dosierer werden hierbei über eine gemeinsame Hauptantriebswelle angetrieben, die durch alle Dosierer durchgeführt ist. Auf dieser Hauptantriebswelle befinden sich die Dosierräder, welche das Saatgut letztendlich dosieren. Die Dosierräder können hierbei ausgetauscht werden, was jedoch eine Demontage der durchgehenden Hauptantriebswelle erfordert.

Ein Nachteil bei diesen bekannten Dosiereinrichtungen gemäß EP 2 832 203 B1 ist deshalb der große Aufwand zum Austausch der Dosierräder, da hierzu die durchgehende Hauptantriebswelle demontiert werden muss.

Weiterhin ist zu erwähnen, dass die einzelnen Dosierer bei der bekannten Drillmaschine gemäß EP 2 832 203 B1 wahlweise als Fahrgassendosierer oder als Normaldosierer konfiguriert werden können. In einem Fahrgassenbetrieb geben dann nur die Normaldosierer Dosiergut ab, während die Fahrgassendosierer im Fahrgassenbetrieb stillgesetzt sind und deshalb kein Dosiergut abgebeben. In einem Normalbetrieb geben dagegen alle Dosierer Dosiergut ab, einschließlich der Fahrgassendosierer, die dann auch angetrieben werden. Der Antrieb der Fahrgassendosierer erfolgt hierbei durch eine zusätzliche Vorgelegewelle, die nur auf die Fahrgassendosierer wirkt, während die Normaldosierer von der durchgehenden Hauptantriebswelle angetrieben werden. Im Fahrgassenbetrieb wird die Vorgelegewelle dann stillgesetzt, so dass die Fahrgassendosierer nicht angetrieben werden und deshalb auch kein Dosiergut abgeben.

Ein weiterer Nachteil der vorstehend beschriebenen bekannten Dosiereinrichtungen gemäß EP 2 832 203 B1 ist also der große Aufwand zur Konfiguration der einzelnen Dosierer entweder als Fahrgassendosierer oder als Normaldosierer.

Darüber hinaus benötigt die vorstehend beschriebene bekannte Dosiereinrichtung gemäß EP 2 832 203 B1 zwei durchgehende Antriebswellen, nämlich die Hauptantriebswelle zum Antrieb der Normaldosierer und die zusätzliche Vorgelegewelle zum Antrieb der Fahrgassendosierer.

Der Erfindung liegt deshalb die Aufgabe zugrunde, die bekannten Dosiereinrichtungen entsprechend zu verbessern.

Diese Aufgabe wird durch eine erfindungsgemäße Dosiereinrichtung gelöst.

Die erfindungsgemäße Dosiereinrichtung weist zunächst in Übereinstimmung mit dem Stand der Technik mehrere Dosierer auf, die vorzugsweise in einer Reihe nebeneinander angeordnet sind und jeweils mindestens ein drehbares Dosierrad enthalten.

Darüber hinaus hat auch die erfindungsgemäße Dosiereinrichtung eine drehbare Hauptantriebswelle zum Antrieb der Dosierer.

Im Gegensatz zu der bekannten Dosiereinrichtung gemäß EP 2 832 203 B1 sind die Dosierräder der einzelnen Dosierer jedoch vorzugsweise nicht direkt auf der Hauptantriebswelle angeordnet. Vielmehr weist die erfindungsgemäße Dosiereinrichtung separate Dosiererantriebswellen auf, die von der Hauptantriebswelle angetrieben werden können und die Dosierräder drehen. Dies bietet den Vorteil, dass die durchgehende Hauptantriebswelle für einen Austausch eines Dosierrades nicht demontiert werden muss, sondern nur die zugehörige Dosiererantriebswelle. Darüber hinaus erfordert ein Austausch eines Dosierrads vorzugsweise auch keine Demontage der benachbarten Dosierer. Der Austausch der Dosierräder ist dadurch wesentlich einfacher.

In einem bevorzugten Ausführungsbeispiel der Erfindung weist jeder Dosierer jeweils eine zugehörige Dosiererantriebswelle auf. Hierbei treibt dann jede Dosiererantriebswelle genau einen Dosierer an.

Es ist jedoch alternativ auch möglich, dass mehrere benachbarte Dosierer eine gemeinsame Dosiererantriebswelle haben. Bei dieser Alternative kann eine Dosiererantriebswelle also mehrere Dosierer antreiben.

In dem bevorzugten Ausführungsbeispiel der Erfindung verlaufen die einzelnen Dosiererantriebswellen parallel zu der Hauptantriebswelle und in einem Abstand zu der Hauptantriebswelle.

Die Dosiererantriebswellen verlaufen dagegen vorzugsweise koaxial zueinander.

Weiterhin ist zu erwähnen, dass die einzelnen Dosiererantriebswellen vorzugsweise wesentlich kürzer sind als die Hauptantriebswelle. So erstrecken sich die einzelnen Dosiererantriebswellen in Axialrichtung vorzugsweise nur über einen oder - bei einem gemeinsamen Antrieb mehrerer Dosierer durch eine Dosiererantriebswelle - über mehrere Dosierer, während sich die Hauptantriebswelle in Axialrichtung vorzugsweise über alle Dosierer erstreckt, die zu der Dosiereinrichtung gehören.

Ferner ist zu erwähnen, dass die Hauptantriebswelle bei dem bevorzugten Ausführungsbeispiel nicht durch die Dosierer hindurchgeht, sondern seitlich (d.h. in Zugrichtung der Drillmaschine) gegenüber den Dosierern versetzt ist.

Darüber hinaus ist zu erwähnen, dass die Dosiererantriebswellen bei den einzelnen Dosierern vorzugsweise auf derselben Seite aus den Dosierern herausragen. Beispielsweise können die Dosiererantriebswellen bezüglich der Zugrichtung der Drillmaschine alle zur linken Seite oder alle zur rechten Seite aus den Dosierern herausragen.

Ferner ist zu erwähnen, dass die Dosierräder vorzugsweise direkt auf den jeweiligen Dosiererantriebswellen anordnet und drehfest mit der zugehörigen Dosiererantriebswelle verbunden sind. Es wäre auch denkbar, dass die einzelne Dosierantriebswellen die Dosierräder umfasst, d.h. dass bspw. die Dosierantriebswellen derartig ausgeführt sind, dass diese auch als Dosierräder eingesetzt werden können.

Die Erfindung umfasst gemäß einem anderen Erfindungsaspekt auch die allgemeine technische Lehre, ein umkonfigurierbares Getriebe vorzusehen, das ein Drehmoment von der Hauptantriebswelle auf die einzelnen Dosiererantriebswellen der jeweiligen Dosierer überträgt. Im Rahmen dieser Umkonfiguration des Getriebes kann dann einfach festgelegt werden, welcher der Dosierer als Fahrgassendosierer betreibbar ist.

Der im Rahmen der Erfindung verwendete Begriff eines Getriebes ist nicht beschränkt auf Zahnräder und Wellen eines Zahnradgetriebes. Vielmehr umfasst dieser Begriff auch andere Getriebeteile (z.B. Distanzhülsen), die eine Umkonfiguration des Getriebes und damit eine Auswahl und Festlegung der Fahrgassendosierer ermöglichen.

Das Getriebe dient hierbei zunächst zur Drehmomentübertragung von der gemeinsamen Hauptantriebswelle auf die einzelnen Dosiererantriebswellen der einzelnen Dosierer. Hierbei ist in einem Fahrgassenbetrieb mindestens einer der Dosierer als Fahrgassendosierer konfiguriert und wird dann nicht angetrieben, damit dieser Fahrgassendosierer in einer Fahrgasse auf einem Acker kein Dosiergut abgibt, während die anderen Dosierer auch in dem Fahrgassenbetrieb angetrieben werden, um das Dosiergut abzugeben.

Es wurde bereits vorstehend kurz erwähnt, dass das Getriebe umkonfiguriert werden kann, um in einfacher Weise festzulegen, welcher der Dosierer als Fahrgassendosierer betrieben werden kann. Diese Umkonfiguration der Getriebekonfiguration ist im Rahmen der Erfindung vorzugsweise manuell möglich, d.h. eine Bedienungsperson kann die Getriebekonfiguration einfach durch einen manuellen Eingriff ändern. Diese Änderung erfolgt vorzugsweise ohne Werkzeuge, so dass die Umkonfiguration schnell und in einfacher Weise möglich ist, beispielsweise durch ein Stecksystem, Clipsystem, Rastsystem und/oder dergleichen.

In einem bevorzugten Ausführungsbeispiel der Erfindung ist die Hauptantriebswelle axial verschiebbar zwischen einer Fahrgassenstellung für den Fahrgassenbetrieb einerseits und einer Grundstellung andererseits. In der Grundstellung treibt die Hauptantriebswelle alle Dosierer der Dosiereinrichtung an einschließlich dem Fahrgassendosierer. In der Fahrgassenstellung treibt die Hauptantriebswelle dagegen den Fahrgassendosierer nicht an, sondern nur die anderen Dosierer.

In dem bevorzugten Ausführungsbeispiel der Erfindung tragen die einzelnen Dosiererantriebswellen jeweils ein Zahnrad, das drehfest auf der jeweiligen Dosiererantriebswelle montiert ist und/oder durch die Dosierantriebswelle gebildet ist, wobei die einzelnen Zahnräder vorzugsweise eine Außenverzahnung haben.

Die Hauptantriebswelle trägt und/oder bildet ebenfalls für jeden der Dosierer jeweils ein Zahnrad, das vorzugsweise ebenfalls eine Außenverzahnung hat.

Die Zahnräder der Hauptantriebswelle einerseits und die Zahnräder der Dosiererantriebswellen andererseits greifen hierbei jeweils paarweise ineinander, um das Drehmoment von der Hauptantriebswelle auf die Dosiererantriebswellen zu übertragen und/oder sind jeweils mittels bspw. eines Riementriebes zur Drehmomentübertragung wirktechnisch gekoppelt.

Hierbei ist zu erwähnen, dass die Zahnräder auf der Hauptantriebswelle wahlweise mit der Hauptantriebswelle gekoppelt oder von der Hauptantriebswelle entkoppelt werden können. Im gekoppelten Zustand dreht die Hauptantriebswelle die eingekoppelten Zahnräder, so dass die zugehörigen Dosierer angetrieben werden. Im entkoppelten Zustand nimmt die Hauptantriebswelle dagegen die ausgekoppelten Zahnräder auf der Hauptantriebswelle nicht mit, so dass die zugehörigen Dosierer auch nicht angetrieben werden.

In der vorstehend erwähnten Grundstellung der Hauptantriebswelle sind vorzugsweise alle Zahnräder auf der Hauptantriebswelle mit der Hauptantriebswelle gekoppelt, d.h. die Hauptantriebswelle nimmt dann alle Zahnräder auf der Hauptantriebswelle mit, so dass alle Dosierer angetrieben werden.

In der vorstehend erwähnten Fahrgassenstellung werden dagegen nur die Zahnräder auf der Hauptantriebswelle mitgenommen und gedreht, die nicht zum Antrieb des Fahrgassendosierers dienen, sondern nur die anderen Dosierer.

Die vorstehend beschriebene Betriebsweise erfordert eine selektive mechanische Entkopplung bzw. Kopplung der Hauptantriebswelle mit den Zahnrädern auf der Hauptantriebswelle, wobei diese Kopplung nachstehend noch detailliert beschrieben wird.

In dem bevorzugten Ausführungsbeispiel der Erfindung tragen die den einzelnen Dosierern zugeordneten Zahnräder auf der Hauptantriebswelle jeweils eine Innenverzahnung, um eine Kopplung mit der Hauptantriebswelle zu ermöglichen.

Die Hauptantriebswelle trägt vorzugsweise für die einzelnen Dosierer jeweils einen ersten Mitnehmer, der drehfest auf der Hauptantriebswelle montiert und axial auf der Hauptantriebswelle fixiert ist. Dies bedeutet, dass die ersten Mitnehmer in axialer Richtung nicht verschoben werden können und sich immer mit der Hauptantriebswelle drehen. Die ersten Mitnehmer tragen vorzugsweise eine Außenverzahnung, die in die Innenverzahnung des zugehörigen Zahnrads auf der Hauptantriebswelle eingreifen kann, um das Zahnrad mitzunehmen. Hierbei ist zu erwähnen, dass die ersten Mitnehmer die Hauptantriebswelle vorzugsweise hülsenförmig umgeben.

Weiterhin ist auf der Hauptantriebswelle für die einzelnen Dosierer vorzugsweise jeweils ein zweiter Mitnehmer angeordnet, wobei die zweiten Mitnehmer axial auf der Hauptantriebswelle verschiebbar und relativ zu der Hauptantriebswelle drehbar sind. Die zweiten Mitnehmer tragen ebenfalls jeweils eine Außenverzahnung, die in die Innenverzahnung des zugehörigen Zahnrads auf der Hauptantriebswelle eingreifen kann, um das Zahnrad mitzunehmen und zu drehen. Auch die zweiten Mitnehmer sind vorzugsweise hülsenförmig geformt und umgeben die Hauptantriebswelle.

Weiterhin ist zu erwähnen, dass die ersten Mitnehmer und die zweiten Mitnehmer vorzugsweise jeweils mindestens eine Stirnverzahnung aufweisen, wobei die Stirnverzahnung in dem ersten Mitnehmer in die Stirnverzahnung in dem zweiten Mitnehmer eingreifen kann, um den zweiten Mitnehmer zu drehen. Bei einer Drehung der Hauptantriebswelle werden die drehfest montierten ersten Mitnehmer also zwangsläufig mitgenommen und drehen sich, wobei die ersten Mitnehmer aufgrund der ineinandergreifenden Stirnverzahnungen dann die zweiten Mitnehmer ebenfalls mitnehmen können. Die ersten und/oder zweiten Mitnehmer können dann mit ihrer Außenverzahnung in die Innenverzahnung in den Zahnrädern auf der Hauptantriebswelle eingreifen und diese dadurch mitnehmen und drehen.

Es wurde vorstehend bereits kurz erwähnt, dass sich das Getriebe der erfindungsgemäßen Dosiereinrichtung umkonfigurieren lässt, um festzulegen, welcher der Dosierer als Fahrgassendosierer betreibbar ist. Diese Umkonfiguration des Getriebes kann durch Distanzstücke erfolgen, die auf der Hauptantriebswelle angeordnet werden und den einzelnen Dosierern zugeordnet sind, wobei die axiale Position der Distanzstücke entlang der Hauptantriebswelle die Getriebekonfiguration bestimmt und festlegt, welcher der Dosierer der Fahrgassendosierer ist. Für jeden der Dosierer ist also auf der Hauptantriebswelle jeweils ein Distanzstück vorgesehen.

Zur Konfiguration des zugehörigen Dosierers als Fahrgassendosierer wird das Distanzstück zwischen dem ersten Mitnehmer und dem zweiten Mitnehmer angeordnet, um deren Stirnverzahnungen voneinander zu trennen. Im Fahrgassenbetrieb liegt dieses Distanzstück dann axial in Deckung mit dem zugehörigen Zahnrad auf der Hauptantriebswelle, wobei das Distanzstück außen keine Außenverzahnung trägt und das zugehörige Zahnrad deshalb im Fahrgassenbetrieb auch nicht mitnimmt und dreht.

Zur Konfiguration des zugehörigen Dosierers als normaler Dosierer, d.h. nicht als Fahrgassendosierer, wird das Distanzstück dagegen axial neben dem ersten Mitnehmer und dem zweiten Mitnehmer angeordnet, die dabei unmittelbar aneinander angrenzen und durch ihre Stirnverzahnungen drehfest miteinander verbunden sind.

Die einzelnen Distanzstücke sind vorzugsweise Distanzhülsen, die einen axial durchgehenden Schlitz haben und deshalb seitlich auf die Hauptantriebswelle aufgeklemmt oder von der Hauptantriebswelle abgenommen werden können, um die Distanzhülsen an einer anderen Axialposition auf der Hauptantriebswelle zu positionieren.

Die Distanzhülsen sind vorzugsweise elastisch federnd, damit die Distanzhülsen auf der Hauptantriebswelle festgeklemmt werden können und trotzdem von der Hauptantriebswelle abgenommen werden können.

Der axial durchgehende Schlitz in Umfangsrichtung der Distanzhülsen weist deshalb vorzugsweise eine Breite auf, die kleiner ist als der Durchmesser der Hauptantriebswelle, damit die Distanzhülsen auf der Hauptantriebswelle festgeklemmt werden können.

Die Umkonfiguration des Getriebes zur Festlegung und Auswahl des mindestens einen Fahrgassendosierers erfolgt also in einfacher Weise, indem die Distanzhülsen von der Hauptantriebswelle abgenommen und an der gewünschten Stelle wieder festgeklemmt werden. Diese Umkonfiguration ist manuell möglich und erfordert keine Werkzeuge, so dass die Umkonfiguration schnell und einfach möglich ist.

Es sei noch darauf hingewiesen, dass anstelle von Distanzhülsen auch noch alternative oder ergänzende andere Bauteile eingesetzt werden können mittels derer eine Umkonfiguration, d.h. ein Trennen des ersten Mitnehmers vom zweiten Mitnehmer möglich oder umsetzbar ist, bspw. durch Schrauben, Splinte, Bolzen, Steckverbindungen, Rastverbindungen und/oder dergleichen.

Es wurde bereits vorstehend kurz erwähnt, dass die einzelnen Distanzstücke außen keine Verzahnung aufweisen und die Zahnräder auf der Hauptantriebswelle deshalb auch nicht mitnehmen, wenn sich die Distanzstücke axial in Deckung mit den Zahnrädern auf der Hauptantriebswelle befinden. Im Fahrgassenbetrieb eines Dosierer befindet sich das Distanzstück bei dem zugehörigen Zahnrad auf der Hauptantriebswelle also axial in Deckung mit dem Zahnrad, so dass die Hauptantriebswelle dieses Zahnrad nicht mitnimmt und den Fahrgassendosierer somit auch nicht antreibt.

Vorstehend wurde auch bereits erwähnt, dass die Hauptantriebswelle axial verschiebbar ist zwischen der Grundstellung und der Fahrgassenstellung.

In der Grundstellung der Hauptantriebswelle sind alle Distanzhülsen in axialer Richtung zu den zugehörigen Zahnrädern auf der Hauptantriebswelle versetzt und die ersten Mitnehmer greifen mit ihrer Außenverzahnung in die Innenverzahnung der Zahnräder auf der Hauptantriebswelle ein, so dass die Hauptantriebswelle in der Grundstellung alle Zahnräder auf der Hauptantriebswelle dreht und auch alle Dosierer antreibt.

In der Fahrgassenstellung der Hauptantriebswelle sind dagegen die Distanzhülsen für die Fahrgassendosierer in axialer Richtung innerhalb der Innenverzahnung des zugehörigen Zahnrads auf der Hauptantriebswelle angeordnet, so dass dieses Zahnrad auf der Hauptantriebswelle von der Hauptantriebswelle nicht mitgenommen wird und der Fahrgassendosierer auch nicht angetrieben wird.

Die ersten Mitnehmer und die zweiten Mitnehmer weisen vorzugsweise axial beidseitig jeweils eine Stirnverzahnung auf, um drehfest miteinander gekoppelt werden zu können. Auf der einen Seite ist die Stirnverzahnung vorzugsweise eine Sägezahnverzahnung. Die gegenüberliegende Stirnverzahnung ist dagegen vorzugsweise eine herkömmliche Nut-Feder-Verzahnung.

Allgemein ist zu erwähnen, dass die Dosierer bei der erfindungsgemäßen Dosiereinrichtung vorzugsweise in einer Dosiererreihe nebeneinander angeordnet sind und zwar vorzugsweise äquidistant, wobei die Dosiererreihe vorzugsweise im Wesentlichen horizontal verläuft. Es können auch zwei Dosiererreihen nebeneinander angeordnet sein, wobei zwischen den beiden Dosiererreihen eine Lücke liegt. Die Anzahl der Dosierer innerhalb der Dosiererreihe ist vorzugsweise größer oder gleich zwei, vier, sechs oder acht, wobei auch eine wesentlich größere Anzahl von Dosierern innerhalb der Dosiererreihe möglich ist.

Ferner ist noch zu erwähnen, dass die Hauptantriebswelle vorzugsweise in mehreren Lagerschalen drehbar gelagert ist, wobei vorzugsweise neben jedem der Zahnräder auf der Hauptantriebswelle beidseitig jeweils eine Lagerschale angeordnet ist. Jedes Zahnrad braucht nämlich in der Regel zwei Lagerstellen, da die Lagerungen auch dafür verantwortlich sind, den auftretenden Axialkräften entgegenzuwirken. Wäre nur auf einer Seite eines Zahnrades eine Lagerstelle, so würde die Hauptantriebswelle bei Betätigung in die andere Richtung die Zahnräder mit verschieben.

Schließlich ist noch zu bemerken, dass die Distanzstücke vorzugsweise baugleich sind, um einen Austausch untereinander zu ermöglichen.

Die Erfindung beansprucht nicht nur Schutz für die vorstehend beschriebene erfindungsgemäße Dosiereinrichtung als einzelne Baugruppe. Vielmehr beansprucht die Erfindung auch Schutz für eine komplette landwirtschaftliche Maschine (z.B. Drillmaschine) mit einer solchen Dosiereinrichtung, wobei die Dosiereinrichtung beispielsweise Saatgut dosieren kann.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert.
Figur 1 zeigt eine Perspektivansicht einer erfindungsgemäßen Drillmaschine mit einer erfindungsgemäßen Dosiereinrichtung.
Figur 2A zeigt eine Perspektivansicht von drei Dosierern der Dosiereinrichtung aus Figur 1 in einer Grundstellung, in der alle Dosierer angetrieben werden.
Figur 3A zeigt eine Frontansicht der drei Dosierer aus Figur 2A ebenfalls in der Grundstellung.
Figur 4A zeigt eine Seitenansicht der drei Dosierer aus den Figuren 2A und 3A ebenfalls in der Grundstellung.
Figur 5A zeigt eine Perspektivansicht einer Hauptantriebswelle der Dosiereinrichtung aus den Figuren 2A-4A ebenfalls in der Grundstellung.
Figur 6A zeigt eine Frontansicht der Hauptantriebswelle ebenfalls in der Grundstellung.

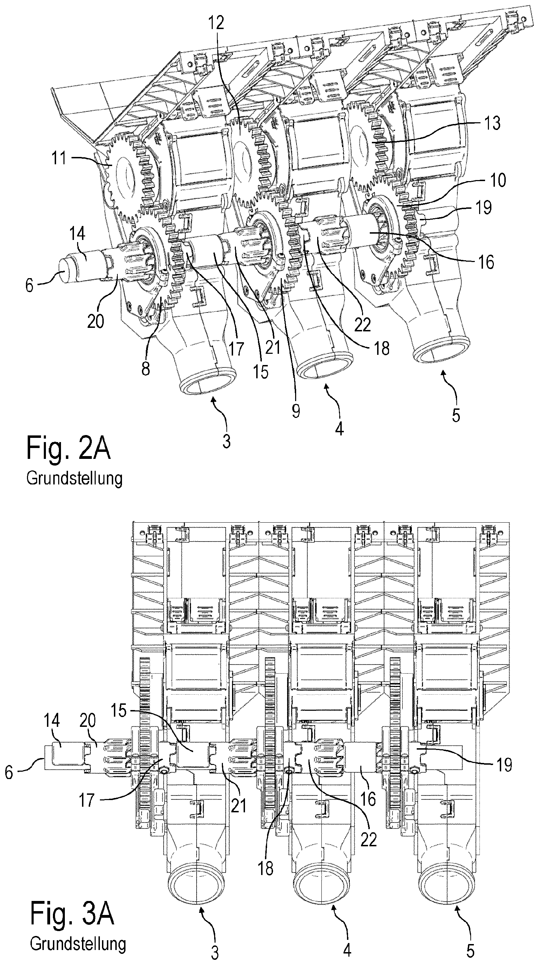

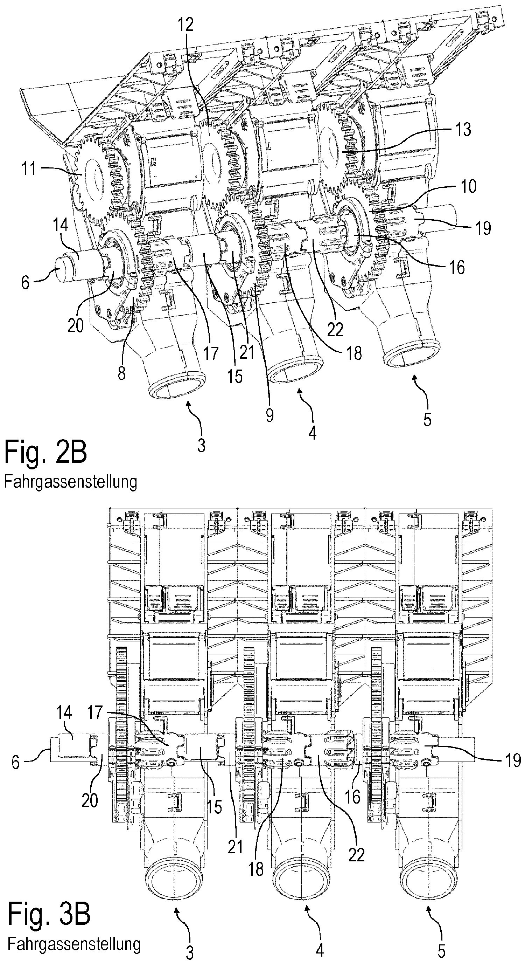

Figuren 2B-6B entsprechen den Figuren 2A-6A, jedoch zeigen die Figuren 2B-6B eine Fahrgassenstellung, in der ein Fahrgassendosierer nicht angetrieben wird.

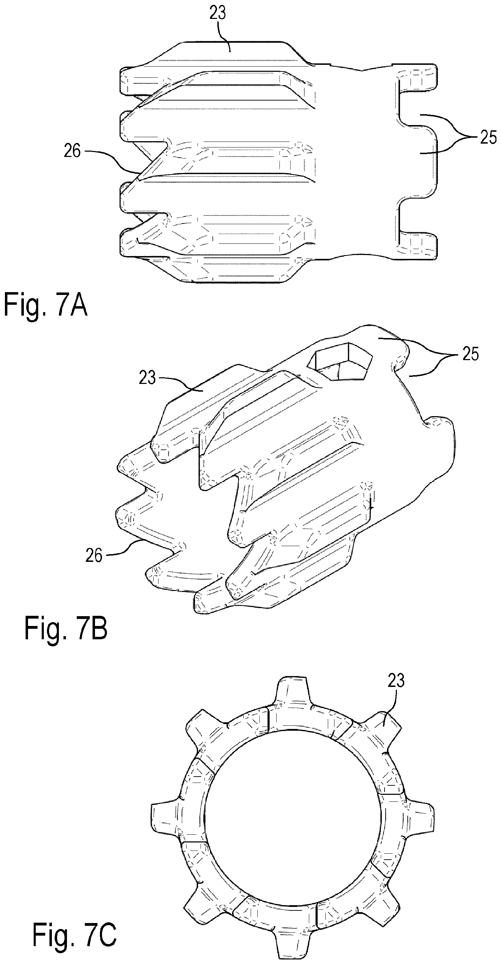

Figuren 7A-7C zeigen verschiedene Ansichten eines Mitnehmers, der fest auf der Hauptantriebswelle montiert ist.

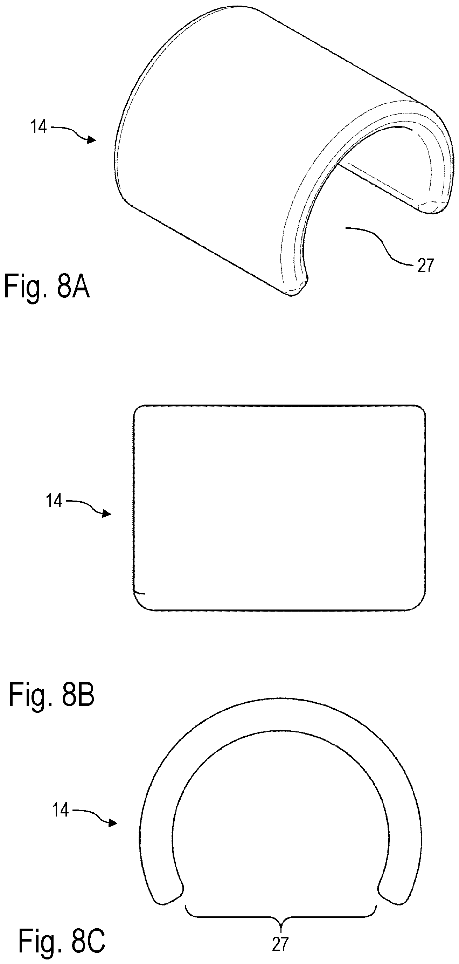

Figuren 8A-8C zeigen verschiedene Ansichten einer Distanzhülse, die auf der Hauptantriebswelle angeordnet wird, um den Fahrgassendosierer auszuwählen.

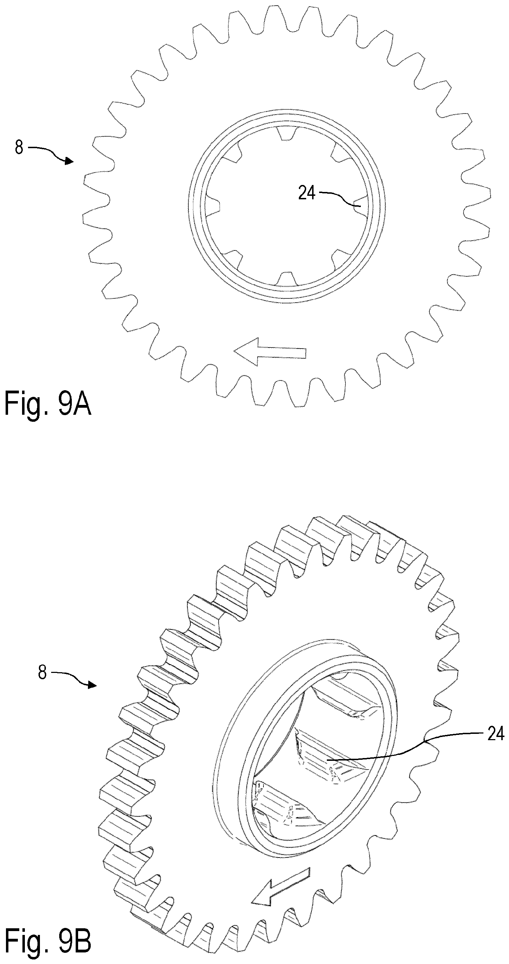

Die Figuren 9A und 9B zeigen verschiedene Ansichten eines Zahnrads auf der Hauptantriebswelle.

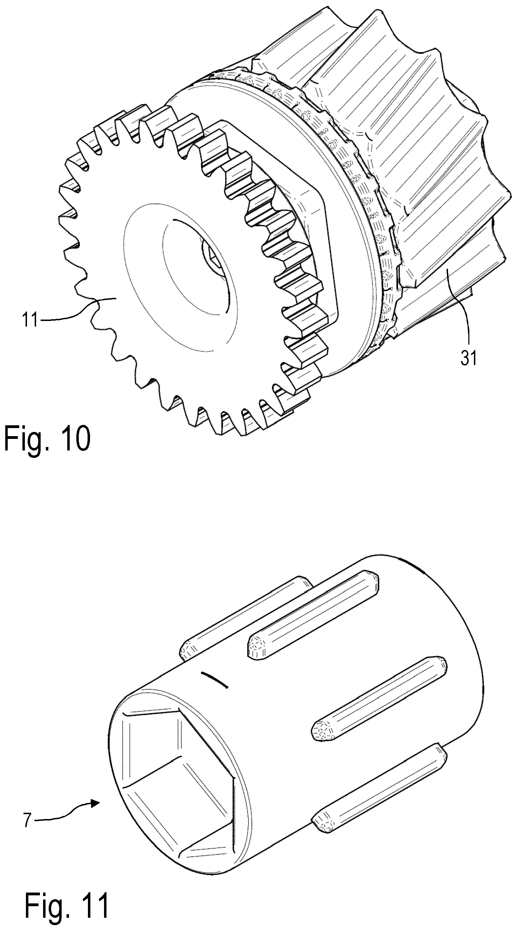

Figur 10 zeigt eine Perspektivansicht eines Zahnrads 11 auf einer Dosiererantriebswelle mit einem Dosierrad.
Figur 11 zeigt eine Perspektivansicht einer Dosiererantriebswelle.

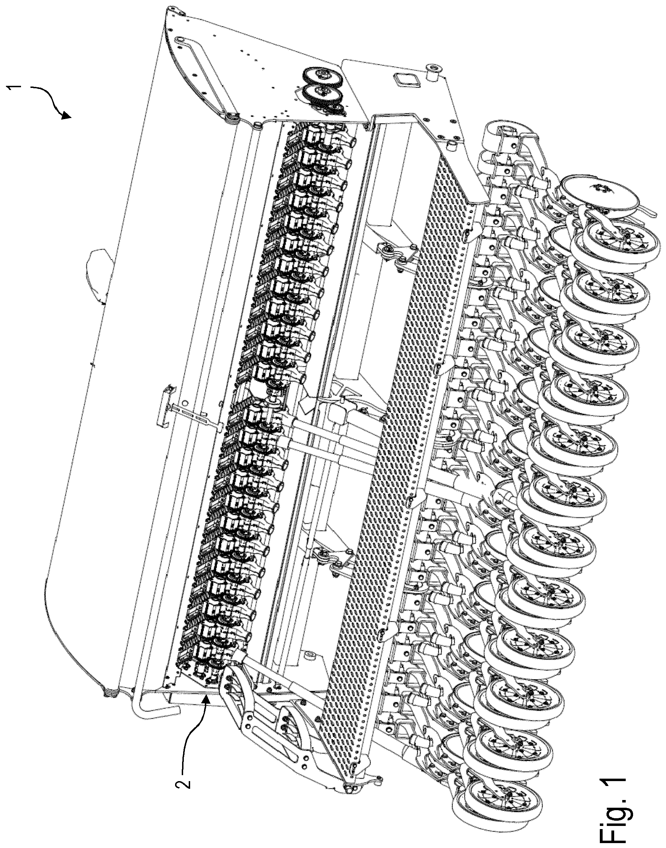

Figur 1 zeigt eine Perspektivansicht einer erfindungsgemäßen Drillmaschine 1, die weitgehend herkömmlich aufgebaut ist, so dass auf eine detaillierte Beschreibung des Aufbaus und der Funktionsweise der Drillmaschine 1 verzichtet werden kann, da dies dem Fachmann bekannt ist. Im Rahmen der Erfindung ist lediglich von Bedeutung, dass die Drillmaschine zumindest eine Dosiereinrichtung 2 aufweist, die zahlreiche Dosierer 3-5 umfasst, wobei in den folgenden Figuren zur Vereinfachung nur die drei Dosierer 3-5 dargestellt sind. In den Zeichnungen ist zumindest einer der Dosierer 5 als Fahrgassendosierer konfiguriert.

Es sei darauf hingewiesen, dass an der Drillmaschine 1 auch zwei oder mehr unabhängig voneinander arbeitende Sektionen von Dosierern angebracht sein können, wobei die Sektionen mindestens zwei oder mindestens fünf oder mindestens zehn Dosierer umfassen können. Insbesondere umfasst die Drillmaschine 1 zwei Sektionen von Dosierern mit jeweils einer gleichen Anzahl an Dosierern. Somit kann insbesondere eine Halbseitenabschaltung realisiert werden.

Hierbei ist zu erwähnen, dass die einzelnen Dosierer 3-5 wahlweise als Fahrgassendosierer oder als normale Dosierer konfiguriert werden können, wobei die Art und Weise der Konfiguration nachstehend noch detailliert beschrieben wird. Bei einer Konfiguration eines der Dosierer 3-5 als Fahrgassendosierer gibt dieser Fahrgassendosierer im Fahrgassenbetrieb kein Saatgut ab. Ansonsten geben die Dosierer 3-5 dagegen alle Saatgut ab. Die Erfindung zeichnet sich dadurch aus, dass die Auswahl und Festlegung des Fahrgassendosierers einfach und schnell möglich ist, wie noch detailliert beschrieben wird.

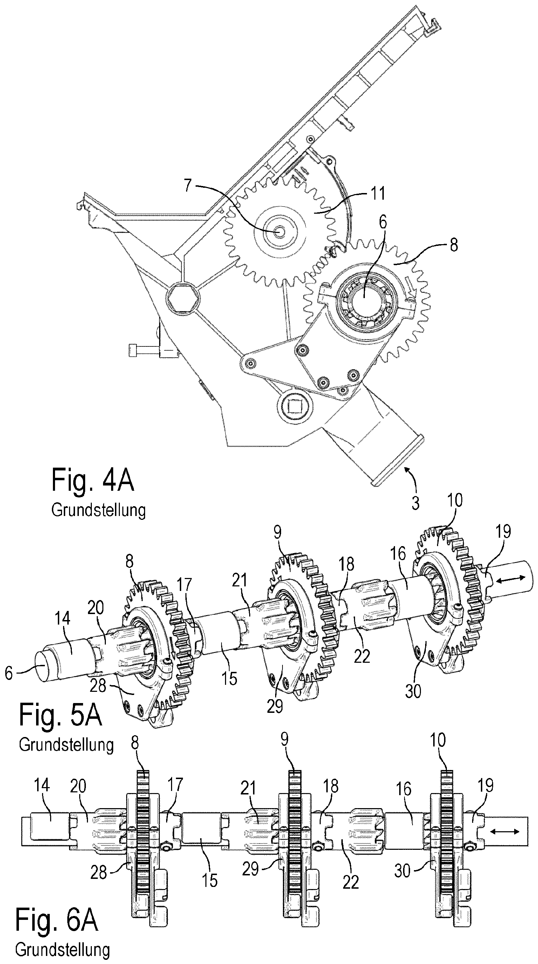

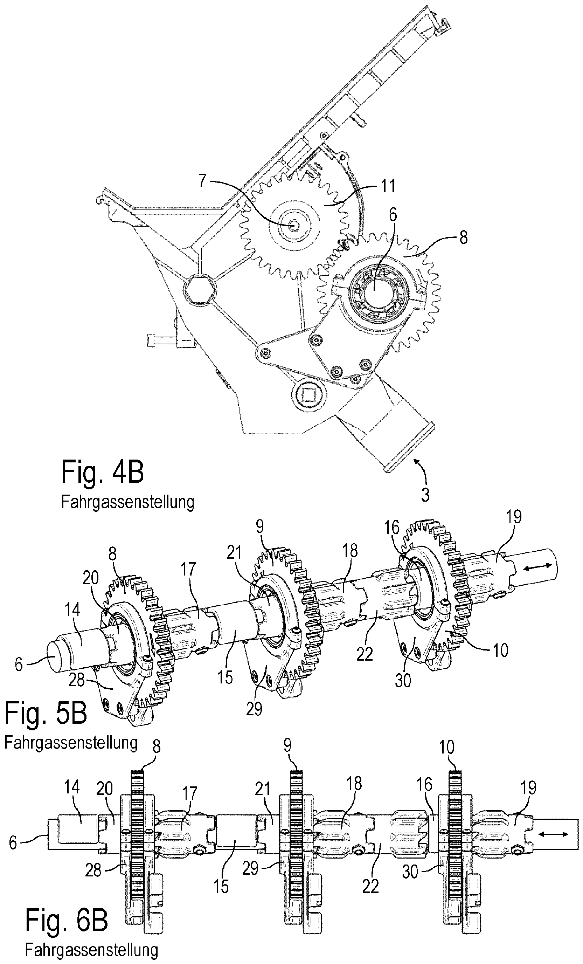

Die Dosiereinrichtung 2 umfasst weiterhin eine Hauptantriebswelle 6, die drehbar und axial verschiebbar ist, wie durch den Doppelpfeil in den Figuren 5A, 6A, 5B, 6B angedeutet ist. Die axiale Verschiebung der Hauptantriebswelle 6 kann mittels eines Linearantriebs (nicht dargestellt) erfolgen, der beispielsweise hydraulisch, elektrisch und/oder pneumatisch betrieben wird. Hierzu weist der Linearantrieb vorzugsweise einen Hydraulik- bzw. Pneumatikzylinder auf.

Die einzelnen Dosierer 3-5 haben jeweils eine Dosiererantriebswelle 7 (vgl. Figuren 10 und 11), wobei in den Zeichnungen nur die Dosiererantriebswelle 7 des Dosierers 3 dargestellt ist. Die anderen Dosierer 4, 5 haben jedoch in gleicher Weise jeweils eine Dosiererantriebswelle, um den jeweiligen Dosierer 4 bzw. 5 anzutreiben.

Zur Drehmomentübertragung von der Hauptantriebswelle 6 auf die einzelnen Dosiererantriebswellen 7 dient ein Zahnradgetriebe. Dieses Zahnradgetriebe weist zunächst drei Zahnräder 8-10 auf der Hauptantriebswelle 6 auf, wobei die Zahnräder 8-10 den einzelnen Dosierern 3-5 zugeordnet sind. Jedes der Zahnräder 8-10 auf der Hauptantriebswelle 6 dient also zum Antrieb eines der Dosierer 3-5. Darüber hinaus weist das Zahnradgetriebe drei Zahnräder 11-13 auf, die drehfest auf den zugehörigen Dosiererantriebswellen 7 montiert sind. Das Zahnrad 11 dient also zum Antrieb des Dosierer 3, das Zahnrad 12 dient zum Antrieb des Dosierer 4 und das Zahnrad 13 dient zum Antrieb des Dosierer 5. Die Zahnräder 8-10 auf der Hauptantriebswelle 6 einerseits und die Zahnräder 11-13 auf den Dosiererantriebswellen 7 andererseits greifen hierbei jeweils paarweise ineinander.

Auf der Hauptantriebswelle 6 befinden sich für jedes der Zahnräder 8-10 jeweils eine Distanzhülse 14-16, jeweils ein erster Mitnehmer 17-19 und jeweils ein zweiter Mitnehmer 20-22. Die Mitnehmer 17-19 sind jeweils drehfest auf der Hauptantriebswelle 6 montiert und axial fixiert, d.h. die Mitnehmer 17-19 sind in axialer Richtung nicht auf der Hauptantriebswelle 6 verschiebbar. Die Mitnehmer 20-22 sind dagegen auf der Hauptantriebswelle 6 drehbar und axial auf der Hauptantriebswelle 6 verschiebbar.

Neben Distanzhülsen 14-16, wären auch andere Bauteile denkbar, mittels derer einer der ersten Mitnehmer 17-19 und ein zweiter Mitnehmer 22-22 auf der Hauptantriebswelle 6 axial fixiert werden können. Beispiele hierfür sind unter anderem Schraubverbindungen, Bolzenverbindungen und/oder dergleichen.

Aus der Detaildarstellung in den Figuren 7A-7C ist ersichtlich, dass die drehfesten und axial fixierten Mitnehmer 17-19 eine Außenverzahnung 23 aufweisen. Aus der Detaildarstellung in den Figuren 9A-9B ist weiterhin ersichtlich, dass die einzelnen Zahnräder 8-10 auf der Hauptantriebswelle 6 eine Innenverzahnung 24 aufweisen. Dies ermöglicht eine Kopplung der Mitnehmer 17-19 einerseits und der Zahnräder 8-10 andererseits, wenn sich die Mitnehmer 17-19 axial in Deckung mit den Zahnrädern 8-10 auf der Hauptantriebswelle 6 befinden, da dann die Außenverzahnung 23 der Mitnehmer 17-19 in die Innenverzahnung 24 der Zahnräder 8-10 eingreift.

Weiterhin ist aus der Detaildarstellung in den Figuren 7A, 7C ersichtlich, dass die einzelnen drehfest montierten Mitnehmer 17-19 axial beidseitig jeweils eine Stirnverzahnung 25, 26 aufweisen.

Die Stirnverzahnung 25 auf der einen Seite besteht aus einer herkömmlichen Nut-Feder-Kombination und dient zur drehfesten Kopplung mit den anderen Mitnehmern 20-22, die ebenfalls eine entsprechende Stirnverzahnung aufweisen.

Die gegenüberliegende Stirnverzahnung 26 ist dagegen als Sägezahnverzahnung ausgeführt.

Die Figuren 4A-6A zeigen hierbei die Grundstellung der Hauptantriebswelle 6, während die Figuren 4B-6B die Fahrgassenstellung der Hauptantriebswelle 6 zeigen.

In der Grundstellung befinden sich die Mitnehmer 17-19 mit ihrer Außenverzahnung 23 alle im Eingriff mit der Innenverzahnung 24 der zugehörigen Zahnräder 8-10 auf der Hauptantriebswelle 6. Dies bedeutet, dass die Hauptantriebswelle 6 bei einer Drehung alle Zahnräder 8-10 mitnimmt und deshalb auch alle Dosierer 3-5 angetrieben werden.

In der Fahrgassenstellung befinden sich dagegen die Mitnehmer 20, 21 im Eingriff mit den Zahnrädern 8, 9, so dass die Dosierer 3, 4 angetrieben werden. Bei dem Zahnrad 10 liegt dagegen im Fahrgassenbetrieb die Distanzhülse 16 axial in Deckung mit dem Zahnrad 10, wobei die Distanzhülse 16 keine Außenverzahnung trägt und deshalb das Zahnrad 10 bei einer Drehung auch nicht mitnimmt. In der Fahrgassenstellung der Hauptantriebswelle 6 führt eine Drehung der Hauptantriebswelle 6 also nur zu einer Drehung der Zahnräder 8, 9, wohingegen das Zahnrad 10 nicht mitgedreht wird.

In diesem Ausführungsbeispiel ist der Dosierer 5 als Fahrgassendosierer konfiguriert, d.h. der Dosierer 5 gibt in der Fahrgassenstellung kein Saatgut ab. Die Auswahl des Dosierers 5 als Fahrgassendosierer erfolgt durch die Anordnung der Distanzhülse 16, die zwischen dem Mitnehmer 19 und dem Mitnehmer 22 angeordnet ist. Bei den anderen Zahnrädern 8, 9 sind die Distanzhülsen 14 bzw. 15 dagegen axial neben den Paaren der Mitnehmer 17, 20 bzw. 18, 21 angeordnet. Die axiale Platzierung der Distanzhülsen 14-16 bestimmt also, ob die zugehörigen Dosierer 3-5 als Fahrgassendosierer oder als normale Dosierer konfiguriert sind.

Die Erfindung ermöglicht hierbei eine einfache Umkonfiguration, indem die Distanzhülsen 14-16 abgenommen und an der gewünschten Stelle wieder festgeklemmt werden. Aus der Detaildarstellung in den Figuren 8A-8C ist ersichtlich, dass die einzelnen Distanzhülsen 14-16 jeweils einen axial durchgehenden Schlitz 27 haben, so dass die Distanzhülsen 14-16 einfach seitlich abgenommen und wieder aufgeklemmt werden können. Dies ist einfach und ohne Werkzeug möglich, da die Distanzhülsen 14-16 elastisch federnd ausgebildet sind.

Weiterhin ist aus den Zeichnungen noch ersichtlich, dass die Hauptantriebswelle 6 in mehreren Lagerschalen 28-30 gelagert sind, wobei sich die Lagerschalen 28-30 jeweils seitlich unmittelbar neben den zugehörigen Zahnrädern 8-10 befinden.

Die Figuren 10 und 11 zeigen schließlich die Dosiererantriebswelle 7 mit dem Zahnrad 11 und einem Dosierrad 31.

Hierbei ist zu erwähnen, dass der Austausch der Dosierräder 31 bei der erfindungsgemäßen Dosiereinrichtung 2 wesentlich einfacher ist als bei den bekannten Drillmaschinen, wie sie beispielsweise aus EP 2 832 203 B1 bekannt sind.

So haben die Dosiereinrichtungen bei den bekannten Drillmaschinen üblicherweise eine durchgehende Hauptantriebswelle, die durch alle Dosierer hindurchgeht und sämtliche Dosierräder der Dosierer trägt. Ein Austausch eines Dosierrads erfordert deshalb bei den bekannten Dosiereinrichtungen eine Demontage der Hauptantriebswelle, was äußerst aufwändig ist.

Bei der erfindungsgemäße Dosiereinrichtung 2 muss die Hauptantriebswelle 6 dagegen für einen Austausch der Dosierräder 31 nicht demontiert werden. Vielmehr reicht es aus, wenn die jeweilige Dosiererantriebswelle 7 demontiert wird, bzw. wenn die jeweilige Dosierantriebswelle 7 oder die Dosierräder ausverschwenkt werden, bspw. aus einem Gehäuse herausgeschwenkt werden.

Die Erfindung ist nicht auf das vorstehende beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den jeweils in Bezug genommenen Ansprüchen und insbesondere auch ohne die Merkmale des Hauptanspruchs. Die Erfindung umfasst also verschiedene Erfindungsaspekte, die unabhängig voneinander Schutz genießen.

Beispielsweise bildet die axiale Verschiebbarkeit der Hauptantriebswelle einen eigenständigen Erfindungsaspekt, der unabhängig vom Hauptanspruch Schutz genießen kann.

Schließlich bildet beispielsweise auch die einfache Umkonfigurierbarkeit des Getriebes für die Auswahl und Festlegung der Fahrgassendosierer und der Normaldosierer einen eigenständigen Erfindungsaspekt, der unabhängig vom Hauptanspruch Schutz genießen kann.

### Bezugszeichenliste:

- 1: Drillmaschine
- 2: Dosiereinrichtung
- 3-5: Dosierer
- 6: Hauptantriebswelle
- 7: Dosiererantriebswelle
- 8-10: Zahnräder auf der Hauptantriebswelle
- 11-13: Zahnräder auf den Dosiererantriebswellen
- 14-16: Distanzhülsen auf der Hauptantriebswelle
- 17-19: Drehfeste und axial fixierte Mitnehmer auf der Hauptantriebswelle
- 20-22: Drehbare und axial verschiebbare Mitnehmer auf der Hauptantriebswelle
- 23: Außenverzahnung der drehfesten Mitnehmer 17-10
- 24: Innenverzahnung der Zahnräder 8-10 auf der Hauptantriebswelle 6
- 25, 26: Stirnverzahnung der der drehfesten Mitnehmer 17-10
- 27: Axial durchgehender Schlitz der Distanzhülse
- 28-30: Lagerschalen der Hauptantriebswelle
- 31: Dosierrad

## Patentansprüche

1. Dosiereinrichtung (2) zum Dosieren von Dosiergut, insbesondere zum Dosieren von Saatgut in einer Drillmaschine (1), mit
a) mehreren Dosierern (3-5) mit jeweils mindestens einem drehbaren Dosierrad (31) zum Dosieren des Dosierguts, und
b) einer drehbaren Hauptantriebswelle (6) zum Antrieb der Dosierräder (31) der Dosierer (3-5), **gekennzeichnet durch**
c) mehrere separate Dosiererantriebswellen (7), die jeweils mindestens einen der Dosierer (3-5) antreiben und/oder bilden und von der Hauptantriebswelle (6) angetrieben werden können.

2. Dosiereinrichtung (2) nach Anspruch 1, **dadurch gekennzeichnet, dass** die Dosierräder (31) der einzelnen Dosierer (3-5) austauschbar sind und zwar ohne eine Demontage der Hauptantriebswelle (6) und/oder ohne eine Demontage der benachbarten Dosierer (3-5).

3. Dosiereinrichtung (2) nach einem der vorhergehenden Ansprüche, **dadurch gekennzeichnet,**
a) **dass** die einzelnen Dosiererantriebswellen (7) jeweils parallel zu der Hauptantriebswelle (6) und in einem Abstand zu der Hauptantriebswelle (6) verlaufen, und/oder
b) **dass** die Dosiererantriebswellen (7) koaxial zueinander angeordnet sind, und/oder
c) **dass** die einzelnen Dosiererantriebswellen (7) jeweils auf der derselben Seite aus den zugehörigen Dosierern (3-5) herausragen, und/oder
d) **dass** sich die einzelnen Dosiererantriebswellen (7) in Axialrichtung nur über einen der Dosierer (3-5) oder nur über einen Teil der der Dosierer (3-5) erstrecken, und/oder
e) **dass** die einzelnen Dosiererantriebswellen (7) in Axialrichtung kürzer sind als die Hauptantriebswelle (6), und/oder
f) **dass** sich die Hauptantriebswelle (6) in Axialrichtung über alle Dosierer (3-5) der Dosiereinrichtung erstreckt, und/oder
g) **dass** die Hauptantriebswelle (6) nicht durch die Dosierer (3-5) hindurchgeführt ist, sondern seitlich zu den Dosierern (3-5) versetzt ist.

4. Dosiereinrichtung (2) nach einem der vorhergehenden Ansprüche, **dadurch gekennzeichnet,**
a) **dass** in einem Fahrgassenbetrieb mindestens einer der Dosierer (3-5) als Fahrgassendosierer (5) nicht angetrieben wird, damit dieser in einer Fahrgasse auf einem Acker kein Dosiergut abgibt, während die anderen Dosierer (3-5) als Normaldosierer (3-4) auch in dem Fahrgassenbetrieb angetrieben werden, um das Dosiergut abzugeben,
b) **dass** in einen Normalbetrieb jeder der Dosierer (3-5) angetrieben wird, um das Dosiergut abzugeben,
c) **dass** zur Drehmomentübertragung von der Hauptantriebswelle (6) auf die einzelnen Dosiererantriebswellen (7) ein Getriebe (8-13) vorgesehen ist, und
d) **dass** das Getriebe (8-13) eine umkonfigurierbare Getriebekonfiguration aufweist, wobei die Getriebekonfiguration bestimmt, welcher der Dosierer (3-5) in dem Fahrgassenbetrieb als Fahrgassendosierer (5) nicht angetrieben wird und welche der Dosierer (3-5) auch in dem Fahrgassenbetrieb als Normaldosierer (3-4) angetrieben werden,
e) **dass** die Getriebekonfiguration des Getriebes (8-13) vorzugsweise manuell und/oder werkzeugfrei umkonfigurierbar ist, um den Fahrgassendosierer (5) auszuwählen.

5. Dosiereinrichtung (2) nach einem der vorhergehenden Ansprüche, **dadurch gekennzeichnet,**
a) **dass** die Hauptantriebswelle (6) axial verschiebbar ist zwischen einer Fahrgassenstellung für den Fahrgassenbetrieb und einer Grundstellung für den Normalbetrieb, und
b) **dass** die Hauptantriebswelle (6) in der Grundstellung alle Dosierer (3-5) einschließlich dem Fahrgassendosierer (5) antreibt, so dass alle Dosierer (3-5) das Dosiergut abgeben, und
c) **dass** die Hauptantriebswelle (6) in der Fahrgassenstellung den mindestens einen Fahrgassendosierer (5) nicht antreibt, sondern nur die Normaldosierer (3-4).

6. Dosiereinrichtung (2) nach Anspruch 5, **gekennzeichnet durch**
a) einen Stellantrieb zum Verschieben der Hauptantriebswelle (6) zwischen der Fahrgassenstellung und der Grundstellung, und/oder
b) eine Steuereinrichtung zur automatischen Ansteuerung des Stellantriebs entsprechend einem vorgegebenen Fahrgassenrhythmus, so dass die Hauptantriebswelle (6) in einer zeitlichen Abfolge entsprechend dem vorgegebenen Fahrgassenrhythmus entweder die Fahrgassenstellung oder die Grundstellung einnimmt.

7. Dosiereinrichtung (2) nach einem der vorhergehenden Ansprüche, **dadurch gekennzeichnet,**
a) **dass** die einzelnen Dosiererantriebswellen (7) jeweils ein Zahnrad (11-13) tragen, das drehfest auf der jeweiligen Dosiererantriebswelle (7) angeordnet ist, wobei die Zahnräder (11-13) optional
a1) jeweils separate Bauteile sind, die drehfest mit der zugehörigen Dosiererantriebswelle (7) verbunden sind, oder
a2) einstückig mit der zugehörigen Dosiererantriebswelle (7) ausgebildet sind,
b) **dass** die Hauptantriebswelle (6) für jeden der Dosierer (3-5) jeweils ein Zahnrad (8-10) trägt, wobei die Zahnräder (8-10) optional
b1) jeweils separate Bauteile sind, die drehfest mit der Hauptantriebswelle (6) verbunden sind, oder
b2) einstückig mit der zugehörigen Hauptantriebswelle (6) ausgebildet sind,
c) **dass** die Zahnräder (8-10) der Hauptantriebswelle (6) einerseits und die Zahnräder (11-13) der Dosiererantriebswellen (7) andererseits jeweils paarweise ineinandergreifen,
d) **dass** die Hauptantriebswelle (6) in der Grundstellung alle Zahnräder (8-10) auf der Hauptantriebswelle (6) mitnimmt und dreht, so dass alle Dosierer (3-5) angetrieben werden, und
e) **dass** die Hauptantriebswelle (6) in der Fahrgassenstellung nicht diejenigen Zahnräder (10) auf der Hauptantriebswelle (6) mitnimmt und dreht, die zum Antrieb des Fahrgassendosierers (5) dienen, sondern nur die anderen Zahnräder (8, 9) auf der Hauptantriebswelle (6), so dass in der Fahrgassenstellung der Hauptantriebswelle (6) der Fahrgassendosierer (5) nicht angetrieben wird, sondern nur die anderen Dosierer (3-4).

8. Dosiereinrichtung (2) nach Anspruch 7, **dadurch gekennzeichnet,**
a) **dass** die den einzelnen Dosierern (3-5) zugeordneten Zahnräder (8-10) auf der Hauptantriebswelle (6) jeweils eine Innenverzahnung (24) tragen, und/oder
b) **dass** die Hauptantriebswelle (6) für die einzelnen Dosierer (3-5) jeweils einen ersten Mitnehmer (17-19) trägt, wobei der erste Mitnehmer (17-19)
b1) drehfest auf der Hauptantriebswelle (6) montiert ist,
b2) axial auf der Hauptantriebswelle (6) fixiert ist,
b3) eine Außenverzahnung (23) trägt, die in die Innenverzahnung (24) des zugehörigen Zahnrads (8-10) auf der Hauptantriebswelle (6) eingreifen kann, um das Zahnrad (8-10) mitzunehmen,
b4) die Hauptantriebswelle (6) vorzugsweise hülsenförmig umgibt, und/oder
c) **dass** die Hauptantriebswelle (6) für die einzelnen Dosierer (3-5) jeweils einen zweiten Mitnehmer (20-22) aufweist, wobei der zweite Mitnehmer (20-22)
c1) axial auf der Hauptantriebswelle (6) verschiebbar ist,
c2) relativ zu der Hauptantriebswelle (6) drehbar ist,
c3) eine Außenverzahnung (23) trägt, die in die Innenverzahnung (24) des zugehörigen Zahnrads (8-10) auf der Hauptantriebswelle (6) eingreifen kann, um das Zahnrad (8-10) mitzunehmen, und
c4) die Hauptantriebswelle (6) vorzugsweise hülsenförmig umgibt, und/oder
d) **dass** der erste Mitnehmer (17-19) und der zweite Mitnehmer (20-22) jeweils eine Stirnverzahnung (25, 26) aufweisen, damit der drehfest auf der Hauptantriebswelle (6) montierte erste Mitnehmer (17-19) den drehbar auf der Hauptantriebswelle (6) montierten zweiten Mitnehmer (20-22) mitnehmen und drehen kann.

9. Dosiereinrichtung (2) nach einem der vorhergehenden Ansprüche, **dadurch gekennzeichnet, dass** die Hauptantriebswelle (6) mehrere Konfigurationselemente (14-16) trägt, die den einzelnen Dosierern (3-5) zugeordnet sind und die Getriebekonfiguration bestimmen, so dass die Konfigurationselemente (14-16) festlegen, welcher der Dosierer (3-5) ein Fahrgassendosierer (5) ist.

10. Dosiereinrichtung (2) nach Anspruch 9, **dadurch gekennzeichnet,**
a) **dass** die Konfigurationselemente (14-16) Distanzstücke (14-16) sind, wobei die axiale Position der Distanzstücke (14-16) entlang der Hauptantriebswelle (6) die Getriebekonfiguration bestimmt und festlegt, welcher der Dosierer (3-5) ein Fahrgassendosierer (5) ist, oder
b) **dass** die Konfigurationselemente formschlüssige Verbindungselemente sind, insbesondere Bolzen, um die Hauptantriebswelle (6) mit denjenigen Zahnrädern auf der Hauptantriebswelle (6) drehfest zu verbinden, die zum Antrieb der Normaldosierer (3-4) dienen.

11. Dosiereinrichtung (2) nach Anspruch 10,
**dadurch gekennzeichnet,**
a) **dass** das Distanzstück (14-16) bei dem Fahrgassendosierer (5) auf der Hauptantriebswelle (6) zwischen dem ersten Mitnehmer (19) und dem zweiten Mitnehmer (22) angeordnet ist, und
b) **dass** die Distanzstücke (14-16) bei den Normaldosierern (3-4) auf der Hauptantriebswelle (6) jeweils axial neben dem ersten Mitnehmer (17, 18) und dem zweiten Mitnehmer (20, 21) angeordnet sind, die unmittelbar aneinander angrenzen und durch Stirnverzahnungen (25, 26) drehfest miteinander verbunden sind.

12. Dosiereinrichtung (2) nach einem der Ansprüche 10 bis 11, **dadurch gekennzeichnet,**
a) **dass** die einzelnen Distanzstücke (14-16) jeweils Distanzhülsen (14-16) sind, die einen axial durchgehenden Schlitz (27) haben und deshalb seitlich auf die Hauptantriebswelle (6) aufgeklemmt oder von der Hauptantriebswelle (6) abgenommen werden können, um die Distanzhülsen (14-16) an einer anderen Axialposition zu positionieren, und/oder
b) **dass** die Distanzhülsen (14-16) elastisch federnd sind, damit die Distanzhülsen (14-16) auf der Hauptantriebswelle (6) festgeklemmt werden können und trotzdem von der Hauptantriebswelle (6) abgenommen werden können, und/oder
c) **dass** der axial durchgehende Schlitz (27) in Umfangsrichtung der Distanzhülse (14-16) eine Breite aufweist, die kleiner ist als der Durchmesser der Hauptantriebswelle (6).

13. Dosiereinrichtung (2) nach einem der Ansprüche 10 bis 12, **dadurch gekennzeichnet, dass** die einzelnen Distanzstücke (14-16) außen keine Verzahnung aufweisen und die Zahnräder (8-10) auf der Hauptantriebswelle (6) deshalb auch nicht mitnehmen, wenn sich die Distanzstücke (14-16) axial in Deckung mit den Zahnrädern (8-10) auf der Hauptantriebswelle (6) befinden.

14. Dosiereinrichtung (2) nach einem der Ansprüche 12 bis 13, **dadurch gekennzeichnet,**
a) **dass** in der Grundstellung der Hauptantriebswelle (6) alle Distanzhülsen (14-16) in axialer Richtung zu den Zahnrädern (8-10) auf der Hauptantriebswelle (6) versetzt sind und die ersten Mitnehmer (17-19) mit ihrer Außenverzahnung (23) in die Innenverzahnung (24) der Zahnräder (8-10) auf der Hauptantriebswelle (6) eingreifen, so dass die Hauptantriebswelle (6) in der Grundstellung alle Zahnräder (8-10) auf der Hauptantriebswelle (6) dreht und auch alle Dosierer (3-5) antreibt, und
b) **dass** in der Fahrgassenstellung der Hauptantriebswelle (6) mindestens eine der Distanzhülsen (14-16) in axialer Richtung innerhalb der Innenverzahnung eines der Zahnräder (8-10) auf der Hauptantriebswelle (6) angeordnet ist, so dass dieses Zahnrad (10) von der Hauptantriebswelle (6) nicht mitgenommen wird und auch der zugehörige Fahrgassendosierer (5) kein Dosiergut dosiert.

15. Dosiereinrichtung (2) nach einem der Ansprüche 8 bis 14, **dadurch gekennzeichnet,**
a) **dass** die ersten Mitnehmer (17-19) und die zweiten Mitnehmer (20-22) jeweils axial beidseitig eine Stirnverzahnung (25, 26) aufweisen, und/oder
b) **dass** die Stirnverzahnung (25, 26) auf der einen Seite eine Sägezahnverzahnung ist, und/oder
c) **dass** die Stirnverzahnung (25, 26) auf der gegenüberliegenden Seite eine Nut-Feder-Verzahnung ist.

16. Dosiereinrichtung (2) nach einem der vorhergehenden Ansprüche, **dadurch gekennzeichnet,**
a) **dass** die Dosierer (3-5) in einer Dosiererreihe nebeneinander angeordnet sind, und/oder
b) **dass** die Dosiererreihe im Wesentlichen horizontal verläuft, und/oder
c) **dass** die Dosierer (3-5) entlang der Dosiererreihe im Wesentlichen äquidistant angeordnet sind, und/oder
d) **dass** die Zahnräder (8-10) auf der Hauptantriebswelle (6) und die Zahnräder (11-13) auf den Dosiererantriebswellen (7) jeweils eine Außenverzahnung aufweisen, und/oder
e) **dass** die Anzahl der Dosierer (3-5) größer ist als 1, 2, 3, 4, 6 oder 8, und/oder
f) **dass** die Hauptantriebswelle (6) in mehreren Lagerschalen (28-30) drehbar gelagert ist, insbesondere an jedem der Zahnräder (8-10) auf der Hauptantriebswelle (6), und/oder
g) **dass** die Distanzstücke (14-16) baugleich sind, um einen Austausch untereinander zu ermöglichen, und/oder
h) **dass** die Distanzstücke (14-16) unterschiedliche Längen in axialer Richtung aufweisen, wobei die axiale Länge der Distanzstücke (14-16) an den axialen Abstand zwischen den Dosierern (3-5) angepasst ist.

17. Landwirtschaftliche Maschine, insbesondere Drillmaschine (1), mit einer Dosiereinrichtung (2) nach einem der vorhergehenden Ansprüche zum Dosieren des Dosierguts, insbesondere mit mehr als einem Fahrgassendosierer oder mehr als zwei Fahrgassendosierern, optional mit zwei, vier oder sechs Fahrgassendosierern.
